Europäisches Patentamt

European Patent Office

Office européen des brevets

(19)

(11) Veröffentlichungsnummer : **0 091 064**
**B1**

(12) **EUROPÄISCHE PATENTSCHRIFT**

(45) Veröffentlichungstag der Patentschrift :
01.10.86

(21) Anmeldenummer : 83103089.5

(22) Anmeldetag : 29.03.83

(51) Int. Cl.⁴ : **B 01 D 29/24**, B 01 D 29/38

(54) Filtrationsapparat.

(30) Priorität : 02.04.82 DE 3212316

(43) Veröffentlichungstag der Anmeldung :
12.10.83 Patentblatt 83/41

(45) Bekanntmachung des Hinweises auf die Patenterteilung : 01.10.86 Patentblatt 86/40

(84) Benannte Vertragsstaaten :
DE FR GB

(56) Entgegenhaltungen :
US-A- 2 230 174
US-A- 2 757 799
US-A- 3 055 290
US-A- 3 422 958
US-A- 4 289 630

(73) Patentinhaber : Bergwerksverband GmbH
Franz-Fischer-Weg 61
D-4300 Essen 13 (DE)

Boll & Kirch Filterbau GmbH
Siemensstrasse
D-5014 Kerpen (DE)

(72) Erfinder : Romey, Ingo, Dr. Ing.
Sandkamp 25
D-4224 Hünxe 2 (DE)
Erfinder : Lennartz, Rüdiger
Stefan-Lechner-Strasse 45
D-5024 Pulheim (DE)

## Beschreibung

Die Erfindung betrifft einen Filtrationsapparat aus einem mit oberen und unteren Wänden verschlossenen Behälter, mit einem im Trüberaum angeordneten, innerhalb des Behälters frei beweglichen Filtratraum mit ebener Grundplatte und daran angeschlossenen Filterkerzen, mit in den Filtratraum endendem Filtratsteigrohr, wobei der Filtratauslaß über eine Filtratabführleitung beweglich mit dem Filtratraum verbunden ist, mit in der Behälterwandung starr befestigten Zu- und Abführleitungen für Trübe, Filtrat und Trocknungsgas, einer Filterkuchenaustrittsöffnung sowie einer auf die Filterkerzen einwirkenden Klopfeinrichtung.

Filtrationsapparate können für verschiedenste Trennaufgaben eingesetzt werden, bei denen in einer Flüssigkeit suspendierte Partikel aus dieser abzutrennen sind. Die Partikel bilden auf den Filterkerzen, gegebenenfalls unterstützt durch ein Filterhilfsmittel, einen Filterkuchen. Der Aufbau, d. h. die Struktur des Filterkuchens bestimmt im wesentlichen die Filtrationsrate. Wenn diese zu niedrig geworden ist, muß die Trübe aus dem Trüberaum ausgetrieben, der Filterkuchen getrocknet und anschließend ausgetragen werden.

Bei dem aus der gattungsbildenden US-A-4 289 630 bekannten Filtrationsapparat wird das Zurücklaufen des Filtrats durch eine gesonderte Filtratkammer vermieden. Dabei ist der Filtratraum sehr flach, d. h. kleinvolumig gehalten, was große Materialstärken zur Erzielung ausreichender Steifigkeit erfordert. Außerdem ist, mangels geeigneter Führungsmöglichkeit, keine ausreichende Dichtigkeit und Verschleißfestigkeit der axial verschieblichen Fallrohrstrecke erreichbar, die das Filtrat nach unten aus der ebenfalls verschieblich ausgebildeten Filtratkammer ableitet.

Aus der DE-A-28 28 976 ist ein Filtrationsapparat bekannt, bei welchem ein Rücklauftopf am unteren Ende der Steigrohre innerhalb der Filterkerzen vorgesehen ist, um nach Beendigung des Filtrationsschrittes ein Anfeuchten des Filterkuchens durch zurücklaufendes Filtrat zu vermeiden. Der Rücklauftopf faßt aber nur eine Filtratrohrfüllung. Falls im Filtratraum weitere Filtratrückstände enthalten sind, läuft der Topf über, so daß es dann doch zu einem Anfeuchten des Filterkuchens kommen kann.

Weiterhin sind bereits Filtrationsapparate bekannt, die mit einer gattungsfremden Naßreinigung arbeiten :

Aus US-A-3 422 958 ist ein Filtrationsapparat mit gattungsfremder Naßabreinigung des Filterkuchens bekannt, dessen Filtratauslaß entfernt vom Boden des Filtratsammelraums aus diesem herausführt, so daß nach Beenden des Filtrierens ein beträchtlicher Teil des Filtrats in die Filterkerzen zurückläuft. Dies ist bei einer Naßabreinigung des Filterkuchens nicht schädlich, eine Trockenabreinigung wäre damit sehr erschwert. Weiterhin ist für die Rüttelvorrichtung eine gesonderte Hindurchführung durch den Behälterdeckel erforderlich.

Aus US-A-2 230 174 ist ein weiterer gattungsfremder Filtrationsapparat bekannt, bei dem ein zweites Filtratsteigrohr Teil des Filtratauslasses aus dem Filtratraum ist, das allerdings seitlich aus dem Filtratraum herausgeführt ist und in einem Abstand vom Boden des Filtratsammelraumes endet, so daß auch hier ein Teil des Filtrats in die Filterkerze zurückläuft. Das ist aber bei diesem Apparat unschädlich, da eine Naßabreinigung des Filterkuchens erfolgt und kein Trockenaustrag.

Aus US-A-3 055 290 ist ein ebenfalls gattungsfremder Filtrationsapparat bekannt mit Naßabreinigung des Filterkuchens, bei dem ein zweites Filtratsteigrohr Teil des Filtratauslasses ist und oben aus einem im Behälter angeordneten, mit einem Klöpperboden versehenen Filtratraum herausgeführt ist, mit dem es fest verbunden ist und drehbeweglich durch die obere Behälterwand hindurchgeführt ist. Auch hierbei wäre bei einem Apparat mit Trockenabreinigung des Filterhilfsmittels kein ordnungsgemäßer Betrieb des Gerätes gewährleistet. Wegen der Naßabreinigung ist eine Drehbewegung des Filterelementträgers ausreichend.

Es ist die Aufgabe der Erfindung, bei einem Filtrationsapparat der eingangs genannten Art Abdichtungsprobleme bei der Filtratabführung zu vermeiden und gleichzeitig die Klopffestigkeit und die Führung des beweglichen Filtratraumes zu verbessern.

Diese Aufgabe wird durch die kennzeichnenden Merkmale des Anspruchs 1 gelöst.

Vorteilhaft ist, daß nur eine Ausgangsöffnung im Behälter erforderlich ist, durch die ein sich bewegendes Teil hindurchzuführen ist, das den beweglich ausgebildeten Filtratraum führt und trägt. Die Ausgestaltung des zweiten Filtratauslaßrohres als Steigrohr sowie gleichzeitig als Schwingungsüberträger und als Führungselement und die Ausbildung des Filtratraumes unter Verwendung eines Klöpperbodens sind weitere Vorteile der Erfindung.

Obwohl der Filtrataustrag nach oben vorgenommen wird, wird zuverlässig vermieden, daß Filtrat in die Filterkerzen zurückläuft, was die Trockenabreinigung erschweren würde.

Die Strömungsgeschwindigkeit beim Filtrataustritt aus der Filtratkammer wird erhöht, weil die Tauchrohrmündung in einer Aussparung der Trennwand mündet ; hierzu können Einlaßöffnungen für den Filtrateintritt in die Aussparung vorgesehen sein.

Der verschiebliche Filtratraum wird durch die Verwendung des Klöpperbodens so starr gebaut, daß die vollständige Übertragung der Beschleunigungskräfte auf den Filterkuchen auch bei ·großen Filtraträumen gewährleistet ist.

Der Filtratraum ist von Durchströmungsrohren durchdrungen, so daß oberhalb der Trennwand ein Auslaß für Trübezirkulation angeordnet werden kann und/oder aber auch der Trocknungsgasanschlußstutzen. Gleichzeitig wirken diese Durchströmungsrohre mechanisch stabilisierend auf den Filtrationsraum, was besonders günstig ist, wenn dieser als Ganzes gemeinsam mit der Trennwand gegenüber dem Behälter verschieblich ist, weil sie dann als Stützrohre gegen den Überdruck der Trübe wirken.

Zweckmäßige Ausgestaltungen und Weiterbildungen des Erfindungsgegenstandes sind in den Merkmalen der Unteransprüche niedergelegt.

Die Anordnung der Klopfeinrichtung wird dadurch vereinfacht, daß sie konzentrisch zum Tauchrohr vorgesehen ist. Hierdurch wird ferner erreicht, daß aus dem Filtrationsbehälter nur ein einziger abzudichtender Austrittsstutzen vorzusehen ist.

Seitliche Durchbrechungen der Hohlschaftwandung ermöglichen den Filtrataustritt in einem zweiseitig gegenüber dem Hohlschaft für axiale Bewegungen gedichteten Zylinderraum mit Filtrataußlaßstutzen.

Sedimentationen aus der Trübe können durch deren Einleiten an verschiedenen Behälterstellen, aber auch durch eine Fallstromführung der Trübe im Behälter vermieden werden ; außerdem kann die Zirkulation eines Teilstromes der Trübe durch den Behälter vorgesehen sein.

Die Gefahr, daß das in den Trüberaum einströmende Trocknungsgas den Filterkuchen von den Filterkerzen abbläst, wird dadurch vermieden, daß der Trocknungsgaseinlaß in oder — bezüglich der Filterkerzen — im Behälterdeckel angeordnet ist.

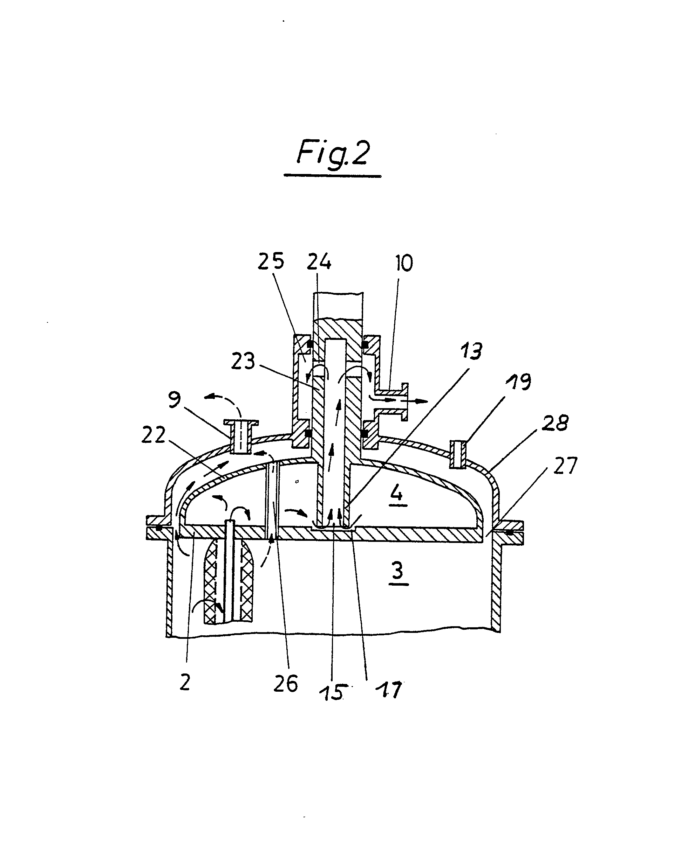

Eine bevorzugte Ausführungsform der Erfindung wird anhand eines in der Fig. 2 dargestellten Ausführungsbeispieles des näheren erläutert.

In der Zeichnung zeigen :

Figur 1 einen Längsschnitt durch einen Filtrationsapparat, mit Trockenabreinigung des Filterkuchens (diese Figur stellt nicht die Erfindung dar),

Figur 2 einen Längsschnitt durch den oberen Teil einer erfindungsgemäßen Ausführungsform.

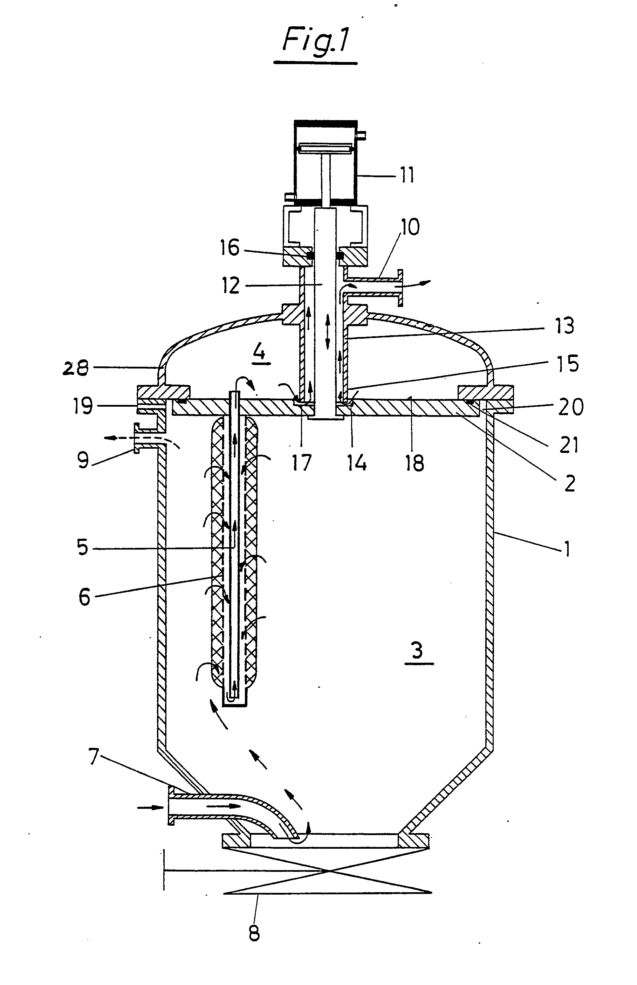

In Figur 1 ist ein Filtrationsbehälter (Behälter 1) durch eine horizontale Trennwand 2 in einen Trüberaum 3 und einen Filtratraum 4 unterteilt. An der Trennwand 2 sind an Steigrohren 5 hängende Filterkerzen 6 verteilt angeordnet. Ein Trübeeinlaß 7 ist z. B. am unteren Behälterende oberhalb der Filterkuchenaustragsklappe 8 vorgesehen, während ein Trübeauslaßstutzen 9 für Zirkulationszwecke im Bereich der Trennwand 2 vorgesehen sein kann — eine Umkehrung der Strömungsrichtung oder weitere Trübeeinlaßstutzen sind möglich.

Der Filtratraum 4 weist einen Filtratauslaßstutzen 10 und eine Klopfeinrichtung 11 auf, welche mit ihrem Stößel 12 auf die Trennwand 2 einwirkt und diese in periodische Schwingbewegungen versetzen kann.

Die Trennwand 2 soll so starr sein, daß eine Dämpfung der durch die Klopfeinrichtung 11 übertragenen Schläge soweit wie möglich vermieden wird.

Ein Tauchrohr 13 durchdringt die obere Wandung 28 des Behälters 1 und ist mit dem Filtratauslaß 10 strömungsmäßig verbunden. Das Mündungsende 15 des Tauchrohres 13 ist unmittelbar vor der Trennwand 2 angeordnet und läßt einen schmalen Ringspalt 14 zwischen dem Mündungsende 15 und der Trennwand 2 für den Filtratdurchtritt frei.

Zentrisch das Tauchrohr 13 durchgreifend und gegenüber diesem durch Dichtung 16 gedichtet ist der Klopfstößel 12 angeordnet.

Eine Aussparung 17 in der Ebene 18 der Trennwand 2 ermöglicht eine in Relation zur Trennwandebene 18 besonders große Annäherung der Tauchrohrmündung 15 an die Trennwand 2.

Ein Trocknungsstutzen 19, etwa in Höhe der Trennwandebene 18, ermöglicht über einen Ringspalt 20 gegenüber dem Behälter 1 eine gleichmäßige Trocknungsgasverteilung.

Eine Ringdichtung 21 dichtet die Trennwand 2 elastisch gegenüber dem Trüberaum 3 des Behälters 1 ab.

In Figur 2 ist der Filtratraum 4 von einer glockenförmigen Wandung 22 einerseits und der Trennwand 2 andererseits gebildet (Klöpperboden). Mit der Wandung 22 ist ein als Klopfstößel dienender Schaft 23 zum Tragen des gesamten Filtratraumes 4 verbunden. Dieser Hohlschaft 23 ist im Inneren des Filtratraumes 4 als Tauchrohr 13 ausgebildet und weist seitliche Durchbrechungen 24 für den Filtrataustritt auf. Die Durchbrechungen 24 können gleichzeitig als Filtrataußlaß dienen, sie können aber auch von einem Zylinderraum 25 mit integriertem Filtrataußlaßstutzen 10 umgeben sein ; dann wird der Zylinderraum 25 über Ringdichtungen gegenüber dem Filtratraum 4 des Behälters 1 und der in Figur 2 nicht dargestellten Klopfeinrichtung 11 abgedichtet. Diese Anordnung trägt zur Erhöhung der Klopfwirkung dadurch bei daß das gesamte Gewicht des Filtratraumes 4 im freien Fall beschleunigt und durch einen hier nicht dargestellten Anschlag abgebremst werden kann.

Durchlaßrohre 26, die einerseits in der Trennwand 2, andererseits in der Glockenwandung 22 münden, erhöhen die mechanische Stabilität und ermöglichen den Durchtritt für Zirkulationstrübe und/oder Trocknungsgas — hierzu dient auch ein Ringspalt 27 zwischen der Glockenwandung 22 und der Wand des Behälters 1.

**Patentansprüche**

1. Filtrationsapparat aus einem mit oberen und unteren Wänden verschlossenen Behälter, mit einem im Trüberaum angeordneten, innerhalb des Behälters frei beweglichen Filtratraum mit ebener Grundplatte und daran angeschlossenen Filterkerzen, mit in den Filtratraum endenden Filtratsteigrohren, wobei der Filtratauslaß über eine Filtratabführleitung beweglich mit dem Filtratraum verbunden ist, mit in der Behälterwandung starr befestigten Zu- und Abführleitungen für Trübe, Filtrat und Trocknungsgas, einer Filterkuchenaustrittsöffnung sowie einer auf die Filterkerzen einwirkenden Klopfeinrichtung, dadurch gekennzeichnet, daß der Filtratraum (4) freitragend im Behälter (1) angeordnet ist, mit einem Klöpperboden (22) und Strömungsrohren (26) als Verstärkungselementen versehen ist, fest mit einem zweiten Filtratsteigrohr (23, 13) verbunden ist, das zum Filtratauslaß (10) führt und längs verschieblich und abgedichtet durch die obere Behälterwand (28) hindurchgeführt ist sowie in seinem oberen Bereich mit der Klopfvorrichtung (11) verbunden ist und mit seiner unteren Öffnung (15) in eine Aussparung (17) der Grundplatte (2) hineinragt.

2. Filtrationsapparat nach Anspruch 1, dadurch gekennzeichnet, daß die Klopfeinrichtung (11) konzentrisch an einer aus dem Behälter (1) herausragenden Verlängerung (23) des zweiten Filtratsteigrohres (13) angeordnet ist.

3. Filtrationsapparat nach Anspruch 3, dadurch gekennzeichnet, daß die Klopfeinrichtung (11) über einen Rückholkolben mit der Verlängerung (23) des zweiten Filtratsteigrohres (13) verbunden ist.

4. Filtrationsapparat nach Anspruch 1 und einem oder mehreren der folgenden Ansprüche, dadurch gekennzeichnet, daß das zweite Filtratsteigrohr (13) im mittleren Bereich (23) seitliche Filtratauslässe (24) aufweist.

5. Filtrationsapparat nach Anspruch 4, dadurch gekennzeichnet, daß die Filtratauslässe (24) in einen zylindrischen Sammelraum (25) mit Filtratauslaßstutzen (10) austragen.

6. Filtrationsapparat nach Anspruch 1, gekennzeichnet durch je einen oberhalb des Filtratraumes (4) angeordneten Trockengaseinlaß (19) und Trübeumlaufauslaß (9).

**Claims**

1. A filter apparatus comprising a container closed with upper and lower walls, having a filtrate space disposed in the pulp space and freely movable inside the container and having a flat base plate and filter cartridges joined thereto, with filtrate rising pipes terminating in the filtrate space, the filtrate outlet being movably connected to the filtrate space by way of a filtrate removal line, with supply and removal lines for pulp, filtrate and drying gas rigidly secured in the container wall, a filter cake discharge opening and a knocking device acting upon the filter cartridges, characterized in that the filtrate space (4) is arranged in a cantilevered manner in the container (1), is provided with a dished end (22) and flow pipes (26) as reinforcement elements, is securely connected to a second filtrate rising pipe (23, 13) which leads to the filtrate discharge (10) and is guided longitudinally displaceably and in a sealed manner through the upper wall (28) of the container and is connected in its upper region with the knocking device (11) and projects with its lower opening (15) into a recess (17) in the base plate (2).

2. A filter apparatus according to claim 1, characterized in that the knocking device (11) is disposed concentrically on an extension (23) of the second filtrate rising pipe (13) projecting from the container (1).

3. A filter apparatus according to claim 2, characterized in that the knocking device (11) is connected to the extension (23) of the second filtrate rising pipe (13) by way of a return-motion piston.

4. A filter apparatus according to claim 1 and one or more of the following claims, characterized in that the central region (23) of the second filtrate rising pipe (13) comprises lateral filtrate outlets (24).

5. A filter apparatus according to claim 4, characterized in that the filtrate outlets (24) discharge into a cylindrical collecting chamber (25) with filtrate outlet connexions (10).

6. A filter apparatus according to claim 1, characterized by one dry gas inlet (19) and pulp circulation outlet (9) each disposed above the filtrate space (4).

**Revendications**

1. Appareil de filtration constitué par un récipient fermé par des parois supérieure et inférieure, avec, disposée de manière librement mobile dans la chambre du trouble, à l'intérieur du récipient, une chambre de filtrat à plaque de fond plane, et avec des bougies filtrantes qui y sont raccordées, avec des tuyaux ascendants pour le filtrat, se terminant dans la chambre du filtrat, où le départ du filtrat est relié de manière mobile à la chambre du filtrat par l'intermédiaire d'un conduit d'évacuation du filtrat, avec, fixés rigidement dans la paroi du récipient, des conduits d'amenée et de départ pour le trouble, le filtrat et le gaz de séchage, avec une ouverture de sortie du tourteau, ainsi qu'avec un dispositif propre à communiquer des chocs, agissant sur les bougies filtrantes, caractérisé en ce que la chambre (4) du filtrat est disposée en étant portée librement dans le récipient (1), avec un fond bombé (22) et des tuyaux d'écoulement (26) jouant le rôle d'éléments de renforcement, la chambre (4) du filtrat étant reliée rigidement à un deuxième tuyau ascendant pour le filtrat (23, 13), qui va à une évacuation (10) du filtrat et qui traverse, en étant déplaçable longitudinalement et en assurant l'étanchéité, la paroi supérieure (28) du récipient, et qui est relié dans sa région supérieure au dispositif (11) propre à communiquer des chocs, et qui pénètre par son ouverture inférieure (15) dans un évidement (17) de la plaque de fond (2).

2. Appareil de filtration suivant la revendication 1, caractérisé en ce que le dispositif (11) propre à communiquer des chocs est disposé concentriquement par rapport à un prolongement (23) du deuxième tuyau ascendant (13) pour le filtrat, ce prolongement sortant du récipient (1).

3. Appareil de filtration suivant la revendication 2, caractérisé en ce que le dispositif (11) propre à communiquer des chocs est relié, par l'intermédiaire d'un piston de rappel, au prolongement (23) du deuxième tuyau ascendant (13) pour le filtrat.

4. Appareil de filtration suivant la revendication 1 et une ou plusieurs des revendications suivantes, caractérisé en ce que le deuxième tuyau ascendant (13) pour le filtrat présente dans sa région centrale (23) des départs latéraux (24) pour le filtrat.

5. Appareil de filtration suivant la revendication 4, caractérisé en ce que les départs (24) pour le filtrat débouchent dans un espace collecteur cylindrique (25), avec une tubulure de sortie (10) pour le filtrat.

6. Appareil de filtration suivant la revendication 1, caractérisé par une admission de gaz de séchage (19) et par un départ de circulation de trouble (9), situés au-dessus de la chambre (4) du filtrat.

# Fig.1

## Fig.2